(19) **Europäisches Patentamt**

**European Patent Office**

**Office européen des brevets**

(11) **EP 1 345 783 B1**

(12) **FASCICULE DE BREVET EUROPEEN**

(45) Date de publication et mention
de la délivrance du brevet:
**29.09.2004 Bulletin 2004/40**

(51) Int Cl.⁷: **B60C 5/16**, B60B 21/12

(21) Numéro de dépôt: **01984846.4**

(86) Numéro de dépôt international:
**PCT/EP2001/014780**

(22) Date de dépôt: **14.12.2001**

(87) Numéro de publication internationale:
**WO 2002/051651 (04.07.2002 Gazette 2002/27)**

(54) **ENSEMBLE CONSITUTE D'UN PNEUMATIQUE ET D'UNE PIECE D'ETANCHEITE ET PROCEDE DE FABRICATION**

AUS EINEM LUFTREIFEN UND EINEM DICHTUNGSTEIL BESTEHENDE EINHEIT UND HERSTELLUNGSVERFAHREN

ASSEMBLY CONSISTING OF A TYRE AND A SEALING COMPONENT AND METHOD FOR MAKING SAME

(84) Etats contractants désignés:
**AT BE CH CY DE DK ES FI FR GB GR IE IT LI LU MC NL PT SE TR**

(30) Priorité: **22.12.2000 FR 0017077**

(43) Date de publication de la demande:
**24.09.2003 Bulletin 2003/39**

(73) Titulaires:
- **Sociéte de Technologie Michelin**
  **63000 Clermont-Ferrand Cedex 09 (FR)**
- **MICHELIN RECHERCHE ET TECHNIQUE S.A.**
  **CH-1763 Granges-Paccot (CH)**

(72) Inventeur: **FERLIN, Olivier**
**F-63200 Malauzat (FR)**

(74) Mandataire: **Diernaz, Christian**
**M. F. P. Michelin,**
**SGD/LG/PI-F35-Ladoux**
**63040 Clermont-Ferrand Cedex 09 (FR)**

(56) Documents cités:
**WO-A-98/21056          DE-A- 2 417 104**
**DE-A- 19 542 982          DE-B- 1 035 500**
**GB-A- 417 509**

## Description

La présente invention concerne un ensemble formé d'un pneumatique sans chambre à air, destiné à être monté sur jante, et d'un dispositif destiné à assurer l'étanchéité entre ladite jante et le dit pneumatique. Elle concerne plus particulièrement les ensembles pour véhicules lourds.

Le brevet FR 1 130 534 montre un tel ensemble avec un pneumatique comportant intérieurement une couche imperméable aux gaz de gonflage généralement utilisés. La jante de service dudit pneumatique est une jante comprenant des sièges peu inclinés par rapport à l'axe de rotation (sièges plats ou sièges inclinés d'un angle égal à 5°). Elle comporte de chaque côté du fond de jante un rebord fixe et un rebord amovible, verrouillé par tout moyen convenable, notamment par un anneau de verrouillage fendu venant se loger dans une rainure prévue à cet effet. Du côté du rebord fixe, que le siège de jante soit plat ou incliné à 5°, le bourrelet du pneumatique vient se loger sur ledit siège et contre le rebord : il s'ensuit une certaine étanchéité. Par contre, du côté du rebord de jante amovible, la jante n'est pas étanche, d'où la nécessité, pour monter et permettre le roulage correct du pneumatique sans chambre à air, de mettre en place une pièce d'étanchéité en matière élastomérique, pièce qui peut se présenter sous forme de deux bords ayant en section méridienne la forme de cornières, lesdits deux bords étant réunis axialement par une bande quasi-plate sur laquelle est disposée de manière étanche une valve de gonflage.

Cette pièce d'étanchéité confère à l'ensemble monté l'étanchéité nécessaire si le dimensionnement, en particulier les épaisseurs entre bourrelets et sièges de jante sont suffisants, au moins sur une partie axiale conséquente.

Le document GB 417509 décrit un pneumatique auquel est associée une pièce d'étanchéité en forme d'anneau ayant des parties latérales fixées radialement sous les bourrelets du pneumatique. Toutefois, ce document ne décrit ni ne suggère aucun moyen pour rendre aisé et sûre la séparation de la pièce d'étanchéité du pneumatique afin d'accéder à l'intérieur de ce pneumatique.

En effet et pour différentes raisons liées au pneumatique, il est souvent nécessaire de procéder provisoirement au démontage de l'ensemble, en particulier lorsque ledit ensemble est destiné au roulage sur sol plus ou moins accidenté. Pour des raisons notamment de sécurité, il est usuel de remonter uniquement le pneumatique sur la même jante ou une jante de même type en présence d'une chambre à air. Se pose alors le problème de la tenue sur jante des bourrelets alors démunis de la pièce d'étanchéité : il peut y avoir un pincement de la chambre entre les bourrelets et la jante, ou encore une rotation du pneumatique sur sa jante lorsqu'un couple intense est appliqué au pneumatique, ou bien un mouvement axial complètement incontrôlé des bourrelets par rapport à la jante.

Pour remédier à de tels inconvénients et permettre le remontage du pneumatique, l'invention propose de faire en sorte que les deux bords de la pièce d'étanchéité en matière élastomérique soient solidaires du pneumatique permettant ainsi de remonter ledit pneumatique après avoir démonté ce dernier de sa jante de service.

L'ensemble conforme à l'invention comprend un pneumatique sans chambre à air, doté de deux bourrelets et destiné à être monté sur une jante comportant des sièges prolongés radialement vers l'extérieur par des rebords, et une pièce d'étanchéité caoutchouteuse disposée entre ladite jante et ledit pneumatique ; ce pneumatique a des diamètres DP de sièges de bourrelets supérieurs aux diamètres DJ correspondants des sièges de jante de montage ; en outre, ce pneumatique est pourvu solidairement d'une pièce d'étanchéité formée de trois parties solidaires entre elles, une partie centrale, réalisée en mélange caoutchouteux imperméable aux gaz de gonflage et placée axialement entre les bourrelets du pneumatique, cette partie centrale se prolongeant axialement au moins sous les bourrelets du pneumatique par deux parties formant des bords en matériau résistant à la compression (et non nécessairement imperméable aux gaz de gonflage), ces bords étant solidaires des bourrelets du pneumatique et séparables de la partie centrale. La pièce d'étanchéité comporte des moyens ayant pour fonction de permettre une localisation de zone de séparation entre les bords et la partie centrale de ladite pièce afin de. faciliter cette séparation au moyen d'un outil de coupe notamment en évitant d'endommager les bourrelets du pneumatique.

Dans une première variante, ces moyens de localisation prennent la forme de rainure (ou nervure) orientée dans la direction circonférentielle et réalisée sur la face de la pièce d'étanchéité destinée à faire face à la surface de fond de jante; cette rainure (ou nervure) a une profondeur (ou épaisseur) appropriée pour ne pas fragiliser la liaison entre la partie centrale et les bords de la pièce d'étanchéité à l'état neuf. Cette rainure (nervure) sert, au moment de l'enlèvement de la partie centrale, de guide à un outil de coupe pour couper la pièce d'étanchéité entre la partie centrale et les bords afin d'éviter de blesser le bourrelet du pneumatique tout en réalisant une coupe satisfaisante dès le premier essai de séparation.

Dans une autre variante préférentielle permettant de séparer aisément les parties de la pièce d'étanchéité, cette pièce est réalisée par collage entre la partie centrale et les bords selon un plan de préférence oblique selon un angle $\alpha$ au plus égal à 60° (angle mesuré par rapport à la direction axiale); cette zone de collage peut être matérialisée par la présence d'un matériau de couleur différente de la couleur de la pièce d'étanchéité.

Préférentiellement, les bords se présentent, vus en section méridienne, sous forme de bandes en mélange de caoutchouc résistant aux chocs et aux cassures pouvant être occasionnées par les outils de montage et démontage de l'ensemble sur sa jante. Afin d'obtenir un serrage satisfaisant de l'ensemble sur la jante pour assurer une bonne coopération de cet ensemble avec sa jante, l'épaisseur moyenne de chaque bord est telle que la différence entre le diamètre moyen de siège de jante et le diamètre moyen mesuré sur la partie de l'ensemble destinée à venir en contact sur ledit siège est compris entre 0 et 4 mm.

Par serrage, on entend la valeur de la déformation de compression des matériaux présents dans l'ensemble sous un élément annulaire rigide auquel est ancrée une armature de carcasse au cours du montage sur la jante de service. Ce serrage est défini par la relation suivante :

$$S = (DJ-DB)/(DT-DB),$$

où :

   DJ est le diamètre de la jante mesuré sur une perpendiculaire à l'axe de rotation de l'ensemble passant par le centre de gravité de la section méridienne de la tringle de renforcement de bourrelet,

   DT est le diamètre de la base de la tringle pris sur la même perpendiculaire,

   DB est le diamètre intérieur de l'ensemble (pneumatique - pièce d'étanchéité) pris sur la même perpendiculaire.

Ledit serrage peut être constant axialement le long du siège de jante; il peut aussi varier, comme connu en soi, du fait des différences possibles entre les sièges de jante et les sièges des bourrelets munis des pièces d'étanchéité. Le serrage peut augmenter en allant des rebords à la pointe des bourrelets; mais il peut tout aussi bien diminuer. Lesdites variations de serrage peuvent se faire par variation d'épaisseur des bords de pièce d'étanchéité, ou par variation du profil du siège de pneumatique démuni de ladite pièce.

Préférentiellement, les bords se présentent, vus en section méridienne, sous forme de bandes à bords recourbés en mélange de caoutchouc résistant aux chocs et aux cassures pouvant être occasionnées par les outils de montage et démontage de l'ensemble sur sa jante, chaque partie recourbée prolongeant radialement vers l'extérieur la partie du bord située radialement sous chaque bourrelet; ces parties recourbées peuvent avantageusement être en matériau résistant à l'usure par frottement contre les rebords de jante.

La pièce d'étanchéité peut être réalisée avec un matériau identique pour la partie centrale et les bords, étant entendu que ce matériau doit au moins présenter des caractéristiques d'étanchéité à l'air suffisantes et pouvoir être rendu solidaire des bourrelets du pneumatique. Le matériau constituant la pièce d'étanchéité peut être toute matière présentant une souplesse suffisante ainsi qu'une étanchéité à l'air permettant à la fois le montage et le gonflage (et non nécessairement en mélange de caoutchouc).

La perméabilité du matériau de la partie centrale, elle est mesurée par un coefficient de perméabilité c, mesuré à 80°C selon la norme DIN n° 53 536 et s'exprime en $m^2/s$ . Pa. Ce coefficient sera préférentiellement inférieur à $7 \cdot 10^{-7} \, m^2 / s$ . Pa. La fixation de la pièce d'étanchéité aux bourrelets d'un pneumatique pour constituer un ensemble pneumatique fermé peut être, par exemple, réalisée par collage en employant un matériau de liaison assurant à la fois le collage sur le bourrelet et sur le bord de ladite pièce.

Pour permettre la réutilisation dudit pneumatique sur la même jante de montage (ou une jante analogue) avec une chambre à air tout en évitant les problèmes de pincement de la chambre après un démontage pour réparation du pneumatique nécessitant d'avoir accès à l'intérieur du pneumatique, par exemple après une perforation, on enlève la partie centrale de la pièce d'étanchéité en laissant en place les bords de cette pièce sous les bourrelets dudit pneumatique; ceci est possible du fait que la pièce d'étanchéité était solidaire du pneumatique par ses deux bords. De cette manière le pneumatique pourvu de ces bords peut être à nouveau aisément monté sur une même jante de service avec une chambre à air.

L'ensemble pneumatique - pièce d'étanchéité en mélange de caoutchouc forme un tout et son procédé de fabrication comprend les étapes suivantes :

   a) fabrication et vulcanisation d'un pneumatique avec chambre incorporée, comme connu en soi, les diamètres des sièges de bourrelet de pneumatique étant au moins égaux aux diamètres des sièges de jante de service correspondants,

   b) fabrication d'une pièce d'étanchéité non vulcanisée en mélange de caoutchouc par co-extrusion au moyen par exemple d'une extrudeuse à nez à rouleaux, cette pièce comprenant des parties d'extrémité axiale formant des bords,

   c) mise en place de la pièce d'étanchéité à l'intérieur du pneumatique de façon que les bourrelets de ce pneumatique soient en appui sur les bords et mise en place de cet ensemble sur un tambour d'assemblage ayant une surface de moulage cylindrique expansible radialement, cette surface étant limitée axialement par des parties latérales limitant axialement le déplacement axial des bourrelets à l'étape suivante;

   d) expansion radiale du tambour d'assemblage et gonflage du pneumatique à une pression suffisante pour obtenir un contact approprié entre la pièce d'étanchéité et les bourrelets du pneumatique,

e) vulcanisation de la pièce d'étanchéité pour rendre solidaire ladite pièce avec le pneumatique au moyen de la surface de moulage portée à la température requise pour ladite vulcanisation,

f) démontage de l'ensemble pièce d'étanchéité - pneumatique et stockage en l'état.

Lorsque les bords de la pièce d'étanchéité présentent des parties recourbées, il est judicieux de prévoir que les parties latérales limitant le déplacement axial de l'ensemble sur le tambour d'assemblage aient un profil méridien semblable au profil méridien de la jante de service.

Une autre alternative consiste à réaliser un ensemble selon l'invention en employant un procédé comparable au procédé employé pour rénover la bande de roulement d'un pneumatique après usure, par exemple, en disposant une gomme de liaison non vulcanisée entre les bourrelets d'un pneumatique et la pièce d'étanchéité préalablement moulée et vulcanisée puis en réalisant une mise en pression et une vulcanisation de ladite gomme de liaison.

Les caractéristiques de l'invention seront mieux comprises à l'aide de la description qui suit et qui se réfère au dessin, illustrant à titre non limitatif des exemples d'exécution, et sur lequel :

la figure 1 représente partiellement une coupe d'un ensemble formé par un pneumatique une pièce d'étanchéité et une jante,

la figure 2 est une vue du même ensemble après enlèvement de la partie centrale de la pièce d'étanchéité;

la figure 3 montre une autre variante d'un ensemble selon l'invention monté sur une jante de service.

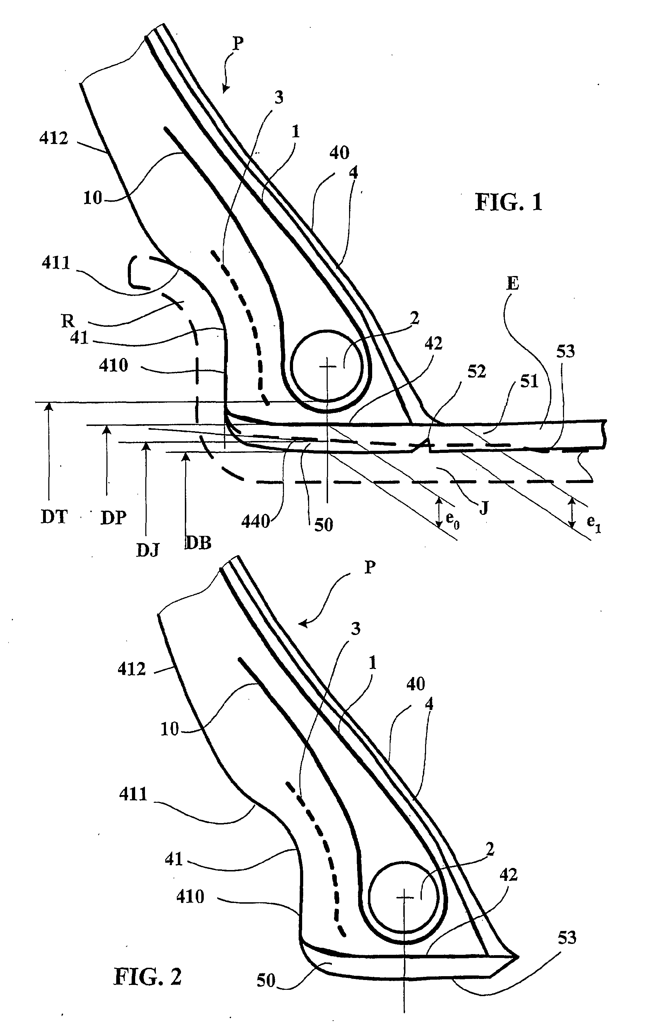

L'ensemble non monté sur sa jante, conforme à l'invention, et montré partiellement sur la figure 1, est composé d'un pneumatique P sans chambre à air indépendante et d'une pièce d'étanchéité E pour être monté sur une jante de service J représentée en traits pointillés. Le pneumatique P a une structure usuelle et comprend principalement une armature de carcasse métallique 1, radiale dans le cas étudié et ancrée dans chaque bourrelet à au moins une tringle 2 pour former un retournement 10. Une armature 3, formée de câbles métalliques inclinés par rapport à la direction circonférentielle, complète le renforcement de chaque bourrelet du pneumatique P. Le bourrelet a une paroi formée :

• axialement à l'intérieur d'une face intérieure 40 d'une couche 4 de mélange de caoutchouc imperméable aux gaz de gonflage,

• axialement à l'extérieur d'une face extérieure 41 partiellement perpendiculaire à l'axe de rotation, comprenant une partie verticale 410 prolongée radialement à l'extérieur par une partie concave 411, elle-même prolongée par une partie 412 de flanc, et

• radialement à l'intérieur par une partie arrondie assurant la jonction entre la partie verticale 410 et un siège 42 de bourrelet de forme tronconique dans l'exemple étudié, ledit siège ayant un diamètre qui décroît régulièrement de son bord axialement extérieur à son bord axialement intérieur en restant de manière constante supérieur au diamètre correspondant du siège incliné 440 de la jante J (représentée en traits pointillés).

Entre la jante J et le pneumatique P et en particulier ses bourrelets, est disposée la pièce d'étanchéité E. Ladite pièce est composée de trois parties : deux parties latérales 50 ayant la forme de couronnes tronconiques destinée à être disposée, de manière solidaire, entre le siège de bourrelet 42 et le siège de jante 440. L'épaisseur $e_0$ des bords de la pièce d'étanchéité E est mesurée sur une perpendiculaire à l'axe de rotation passant par le centre de gravité de la tringle d'ancrage 2 et est égale à la différence (DP - DB), DP étant le diamètre sur ladite perpendiculaire du bourrelet du pneumatique P et DB étant le diamètre intérieur de la couronne 50 de la pièce d'étanchéité E. Cette épaisseur $e_0$ est déterminée de manière à ce qu'il existe un serrage approprié de l'ensemble (pneumatique - pièce d'étanchéité) sur la jante J entre la tringle 2 et ladite jante.

Axialement entre les parties latérales 50, de largeur axiale sensiblement égale à la largeur axiale de la base 42 du bourrelet de pneumatique, se trouve une partie centrale 51 qui peut avoir une épaisseur $e_1$ supérieure à l'épaisseur $e_0$ des parties latérales 50, et qui est munie d'un orifice nécessaire à la pose d'une embase de valve. Au voisinage de la partie axialement à l'intérieur de chaque bourrelet (correspondant à l'intersection des parois 40 et 42), il est prévu une rainure 52 s'étendant circonférentiellement sur la face radialement intérieure 53 de la pièce d'étanchéité E et sur une partie seulement de l'épaisseur de la pièce d'étanchéité. Cette rainure est positionnée sensiblement entre la partie centrale 51 et une des parties latérales 50 de la pièce d'étanchéité et a pour fonction de permettre une découpe correctement localisée et aisée de la partie centrale sans créer d'endommagement des bourrelets. Cette rainure 52 sert à la fois de repère pour positionner l'outil de coupe et de guide à cet outil pour réaliser la séparation de la partie centrale 51 des parties latérales 5 0.

Par commodité, il a été représenté sur la figure 1, l'ensemble pneumatique - pièce d'étanchéité à l'état neuf non monté et non gonflé et sur la même figure une coupe de la jante de montage J en pointillés comprenant un siège de jante de surface tronconique 440 prolongé axialement et radialement à l'extérieur par un rebord R; selon cette représentation, il est aisé de comprendre le serrage des matériaux du pneumatique et de la pièce d'étanchéité sous la tringle 2 dans les bourrelets lors du montage sur cette jante de l'ensemble selon l'invention. Le mélange de caoutchouc constituant les parties latérales 50 de la pièce E et la partie centrale est un mélange unique à base d'élastomère butyl, qui présente les particularités d'avoir une bonne imperméabilité.

Ainsi, lorsque l'ensemble étudié est appelé à être démonté et lorsque l'examen de l'intérieur du pneumatique est rendu nécessaire, la partie centrale 51 de la pièce d'étanchéité est séparée des parties latérales 50 par découpe au moyen d'un outil approprié.

Les parties latérales 50 restant sur le pneumatique, ledit pneumatique, comme montré à la figure 2 après découpe de la pièce d'étanchéité et enlèvement de la partie centrale 51, pourra, après réparation ou autre manipulation, être remonté de manière aisée sur une jante de même type avec une chambre à air indépendante et sans la partie centrale 51, et être réutilisé dans des conditions normales de sécurité et de rendement.

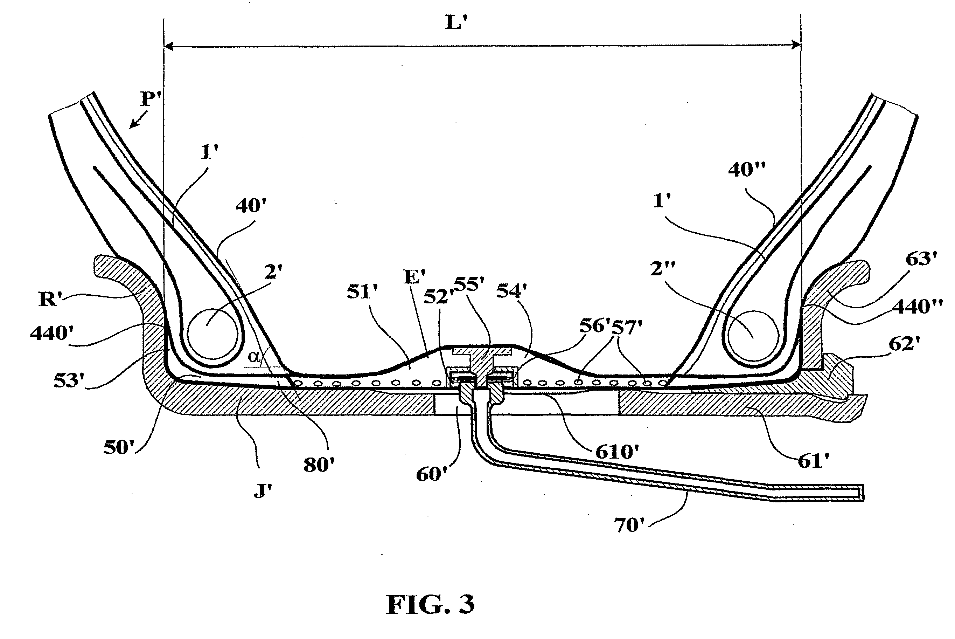

La figure 3 montre une coupe transversale partielle d'une autre variante d'un ensemble selon l'invention, comprenant un pneumatique P' de dimension 11.00 R 20 et une pièce d'étanchéité E', monté et gonflé sur une jante de service J'. Dans cette variante, le pneumatique comprend une armature de carcasse 1' radiale ancrée dans chaque bourrelet à une tringle 2', 2''. Ce pneumatique P a un diamètre mesuré sous les bourrelets et sous les tringles 2' supérieur de 6 mm par rapport au diamètre correspondant de sa jante de montage. Avant montage, le pneumatique est rendu solidaire avec une pièce d'étanchéité E' de géométrie générale cylindrique formée d'une partie centrale 51' prolongée axialement par des parties latérales comprenant une partie 50' destinée à être en contact avec le siège du bourrelet, cette partie 50' étant elle même prolongée axialement et radialement vers l'extérieur par un rebord 53' remontant le long de la paroi externe verticale du bourrelet. Chaque partie latérale a une épaisseur égale à 3 mm.

Dans le cas présenté, la partie centrale 51' est en mélange à base d'élastomère butyl et a une épaisseur moyenne de 3 mm, qui présente les particularités d'avoir une bonne imperméabilité et de né pas avoir un très grand collant à cuit sur les autres mélanges tandis que les parties latérales sont formées en mélange de caoutchouc couramment utilisé pour la couche protectrice de bourrelets de pneumatique.

La jonction 80' entre les parties latérales 50' et la partie centrale 51' est, vue en section méridienne, une jonction oblique faisant un angle $\alpha$ avec l'axe de rotation sensiblement égal à 45°, ladite jonction étant sensiblement dans le prolongement de la paroi interne 40' du bourrelet. Cette jonction 80 est rendue visible soit par le fait que les caoutchoucs des trois parties de la pièce E sont de couleurs différentes, soit par le fait que ladite jonction est matérialisée par une fine couche de couleur. L'emploi de mélange à base de butyl pour la partie centrale facilite la séparation selon l'interface entre ladite partie centrale et les parties latérales par simple traction des parties plus ou moins effilées de ladite partie centrale.

La jante de service J' sur laquelle est monté l'ensemble décrit comprend une première partie 61' limitée axialement par un premier crochet R' solidaire de cette partie 61' et, monté de façon amovible pour permettre le montage et le démontage dudit ensemble, un second crochet 63' verrouillé sur la première partie 61' par un élément de verrouillage 62' dont une partie de la surface radiale externe constitue un siège pour l'ensemble.

Préférentiellement, la largeur axiale entre les bourrelets de l'ensemble non monté est inférieure à la largeur axiale L' entre les rebords de jante R' et 63' et la partie centrale 51' est élastique et déformable dans la direction axiale sous l'action de la pression de gonflage afin de réaliser un bon montage de l'ensemble sur la jante et un bon contact des parois externes verticales 440', 440'' des bourrelets contre les rebords de jante.

En outre et pour permettre le gonflage de l'ensemble monté, il est prévu une valve de gonflage fixée de façon amovible au moyen d'une tige de valve 70' sur une embase de valve 55', elle même fixée de manière solidaire sur une portion élargie 54' de la partie centrale de la pièce d'étanchéité 51'. Cette tige de valve 70' est prévue pour passer au travers d'une fenêtre 60' traversant le fond de jante 610', visible sur la figure 3, fermée axialement à ses deux extrémités. Pour permettre un montage et un démontage aisé de l'ensemble, il est avantageux que l'embase de valve 55' soit montée sur la partie centrale 51' de façon que l'extrémité radialement interne des moyens de fixation de la tige de valve sur ladite embase soit entièrement située à l'intérieur de l'épaisseur de ladite partie centrale. En pratique, ces moyens de fixation sont situés totalement à l'intérieur d'un logement 52' formé sur la pièce d'étanchéité E et s'ouvrant sur la face radialement à l'intérieur de ladite pièce. Ainsi l'extrémité radialement interne des moyens de fixation, ne dépassant pas de la partie centrale, ne risque pas de venir en contact avec la jante et ne risque pas de gêner le démontage par déplacement axial de l'ensemble sur sa jante de service.

Pour le montage, la tige de valve peut être fixée sur l'embase avant même de procéder audit montage dès lors que la partie centrale 51' est suffisamment déformable de façon élastique pour permettre l'introduction de la tige de valve 70' dans la fenêtre 60'. L'ensemble est enfilé sur sa jante de service dépourvue de son rebord amovible 63' et des éléments de verrouillage 62', la tige de valve glissant sur le fond de jante 610' avant de passer dans la fenêtre 60'; l'opération de montage est alors poursuivie jusqu'à complète mise en place sur le fond de jante et mise en place du rebord amovible 63' et ensuite par le gonflage de l'ensemble afin de mettre en place ledit ensemble contre les sièges et les rebords de jante. Pour effectuer l'opération de montage, il peut être judicieux de réaliser une légère dépression de l'ensemble afin de provoquer un léger rapprochement des bourrelets conduisant à une augmentation du diamètre de la partie centrale portant l'embase de valve afin de favoriser le glissement de la tige de valve sur le fond de jante.

Pour le démontage, on peut procéder de façon similaire en ordre inverse après avoir dégonflé l'ensemble (voire procédé à une légère mise en dépression si l'état dudit ensemble le permet); on peut également désolidariser la tige de valve de l'embase de valve, l'ensemble pouvant alors glisser sur le fond de jante car aucun élément de l'embase ne gênant le mouvement axial.

Préférentiellement, la partie centrale est renforcée circonférentiellement pour réduire voire éviter qu'elle ne se déforme de façon permanente à l'intérieur de la fenêtre 60' et vienne ensuite gêner le démontage. Les renforts 57', sous forme de câbles ou fils, peuvent, notamment mais non exclusivement, être orientés selon un angle faible de 0° à 5° par rapport à la direction circonférentielle; ces mêmes renforts, limités à la partie centrale peuvent s'étendre jusqu'à la jonction 80' et peuvent servir de guide à l'outil de découpe employé pour effectuer la séparation entre partie centrale et parties latérales; de préférence l'angle des renforts est au plus égal à 45° (angle mesuré par rapport à la direction circonférentielle). Il est également possible de prévoir la présence de renforts sous forme de câbles ou de fils ou de tissus dans chaque partie latérale ou en surface de chacune desdites parties afin de protéger cette partie.

Toujours dans le même but, il est avantageux de renforcer le logement 52' de l'embase de valve à l'intérieur duquel est prévu le moyen de liaison de la tige de valve avec ladite embase. Une solution de renforcement, montrée avec la réalisation de la figure 3, consiste à incorporer dans la partie centrale un renforcement 56' de forme générale cylindrique d'axe sensiblement perpendiculaire à ladite face intérieure en matériau résistant à la compression prenant appui sur le fond de jante 610' de part et d'autre de la fenêtre 60' dans le sens circonférentiel; ce cylindre 56' ouvert sur la face radialement interne de la partie centrale 51' s'oppose à la déformation de ladite partie à l'intérieur de la fenêtre tout en maintenant suffisamment éloignée l'embase de valve du fond de jante.

Pour éviter qu'après une utilisation prolongée dans le temps, la partie centrale qui vient en contact avec le fond de jante soit plus ou moins adhérente à cette surface, il est judicieux de prévoir un traitement anti-collant sur la face de la partie centrale en vis-à-vis du fond de jante.

Enfin, et par mesure de sécurité, les ensembles peuvent être pourvus de moyens de sécurité destinés à empêcher qu'un ensemble selon l'invention ne puisse être gonflé au delà d'une pression limite lorsque ledit ensemble n'est pas monté sur une jante.

L'invention n'est pas limitée aux exemples décrits et représentés et diverses modifications peuvent y être apportées sans sortir de son cadre.

## Revendications

**1.** Ensemble comprenant un pneumatique (P) sans chambre à air, doté de deux bourrelets et destiné à être monté sur une jante de montage (J) comprenant un fond de jante prolongé axialement par des sièges (440) eux-mêmes prolongés radialement vers l'extérieur par des rebords (R), et une pièce d'étanchéité caoutchouteuse (E) disposée entre ladite jante et ledit pneumatique, les diamètres (DP) de sièges de bourrelets de pneumatique étant supérieurs aux diamètres (DJ) correspondants des sièges (440) de jante, ce pneumatique (P) étant pourvu solidairement de la pièce d'étanchéité (E) formée de trois parties solidaires entre elles, une partie centrale (51), réalisée en matériau imperméable aux gaz de gonflage, étant placée axialement entre les bourrelets du pneumatique, cette partie centrale (51) se prolongeant axialement sous les bourrelets du pneumatique par des bords (50) solidaires desdits bourrelets, ce pneumatique (P) étant **caractérisé en ce que** la pièce d'étanchéité (E) comporte des moyens ayant pour fonction de permettre une localisation de la zone de séparation entre les bords (50) et la partie centrale (51) de la pièce d'étanchéité (E) afin de faciliter cette séparation au moyen d'un outil de coupe sans endommager les bourrelets du pneumatique.

**2.** Ensemble selon la revendication 1, **caractérisé en ce que** les moyens de localisation comprennent à proximité de chaque bourrelet une rainure/ une nervure (52) orientée dans la direction circonférentielle sur la face radialement intérieure de la pièce d'étanchéité.

**3.** Ensemble selon la revendication 1, **caractérisé en ce que** les bords (50) de la pièce d'étanchéité (E) sont collés à la partie centrale (51) selon des surfaces tronconiques faisant, avec la direction axiale, un angle α au plus égal à 60° et **en ce que** les moyens de localisation comprennent sur la surface de collage ou à proximité un matériau de couleur différente de la couleur de la pièce d'étanchéité.

**4.** Ensemble selon l'une des revendications 1 à 3, **caractérisé en ce que** les bords (50) de la pièce d'étanchéité (E) se présentent, vus en section méridienne, sous forme de bandes à bords recourbés (53') en matériau résistant aux chocs et aux cassures pouvant être occasionnées par les outils de montage et démontage de l'ensemble sur sa jante, chaque bord recourbé prolongeant radialement vers l'extérieur la partie du bord (50) située radialement sous chaque bourrelet.

5. Ensemble selon l'une des revendications 1 à 4, **caractérisé en ce que** la partie centrale de la pièce d'étanchéité est réalisée dans un matériau présentant des caractéristiques d'étanchéité à l'air appropriées et **en ce que** les bords de ladite pièce sont réalisés dans un matériau différent et essentiellement résistant aux chocs et aux cassures.

6. Ensemble selon l'une des revendications 1 à 5, **caractérisé en ce qu'**au moins la partie centrale (51) de la pièce d'étanchéité (E) est renforcée circonférentiellement par des renforts sous forme de câbles ou fils faisant un angle au plus égal à 45° avec la direction circonférentielle.

7. Ensemble selon l'une des revendications 1 à 6, **caractérisé en ce que** la pièce d'étanchéité comprend une embase de valve (55') présentant des moyens pour la fixation d'une tige de valve (70'), ces moyens de fixation étant situés totalement à l'intérieur d'un logement (52') formé sur la pièce d'étanchéité (E) et s'ouvrant sur la face radialement à l'intérieur de ladite pièce pour permettre et faciliter le montage et le démontage par déplacement axial de l'ensemble sur sa jante de service.

8. Ensemble selon l'une des revendications 1 à 7, **caractérisé en ce que** la jante de montage comprend une fenêtre (60') traversant le fond de jante pour le passage de la tige de valve (70') et **en ce que** le logement (52') prévu sur la face intérieure de la pièce d'étanchéité comporte un renforcement (56') de forme générale cylindrique s'ouvrant sur ladite face intérieure et de dimension supérieure à la largeur de la fenêtre, ledit renforcement étant en matériau résistant à la compression pour s'opposer à la déformation de la pièce d'étanchéité à l'intérieur de la fenêtre (60').

9. Procédé de fabrication d'un l'ensemble pneumatique (P) - pièce d'étanchéité (E) selon l'une des revendications 1 à 8, **caractérisé en ce qu'**il comprend les étapes suivantes :

   - fabrication et vulcanisation d'un pneumatique avec chambre incorporée, comme connu en soi, les diamètres des sièges de bourrelet de pneumatique étant au moins égaux aux diamètres des sièges de jante de service correspondants;

   - fabrication d'une pièce d'étanchéité non vulcanisée en mélange de caoutchouc par co-extrusion au moyen par exemple d'une extrudeuse à nez à rouleaux, cette pièce comprenant des parties d'extrémité axiale formant des bords;

   - mise en place de la pièce d'étanchéité à l'intérieur du pneumatique de façon que les bourrelets de ce pneumatique soient en appui sur les bords et mise en place de cet ensemble sur un tambour d'assemblage ayant une surface de moulage cylindrique expansible radialement, cette surface étant limitée axialement par des parties latérales limitant axialement le déplacement axial des bourrelets à l'étape suivante;

   - expansion radiale du tambour d'assemblage et gonflage du pneumatique à une pression suffisante pour obtenir un contact approprié entre la pièce d'étanchéité et les bourrelets du pneumatique;

   - vulcanisation de la pièce d'étanchéité pour rendre solidaire ladite pièce avec le pneumatique au moyen de la surface de moulage portée à la température requise pour ladite vulcanisation;

   - démontage de l'ensemble pièce d'étanchéité - pneumatique et stockage en l'état.

**Patentansprüche**

1. Einheit mit. einem schlauchlosen Luftreifen (P), der mit zwei Wülsten versehen und dazu bestimmt ist, auf eine Montagefelge (J) montiert zu werden, die einen Felgenboden aufweist, der axial durch Sitze (440) verlängert wird, die selbst radial nach außen durch Felgenhörner (R) verlängert werden, und mit einem Dichtungsteil (E) aus Kautschuk, das zwischen der Felge und dem Luftreifen angeordnet ist, wobei die Durchmesser (DP) der Luftreifen-Wulstsitze größer sind als die entsprechenden Durchmesser (DJ) der Felgensitze (440'), wobei dieser Luftreifen (P) fest mit dem Dichtungsteil (E) versehen ist, das aus drei fest miteinander verbundenen Bereichen besteht, einem mittleren Bereich (51), der aus einer für die Aufpumpgase undurchlässigen Kautschukmischung besteht und axial zwischen den Wülsten des Luftreifens angeordnet ist, wobei dieser mittlere Bereich (51) sich axial unter den Wülsten des Luftreifens durch fest mit den Wülsten verbundene Ränder (50) verlängert, **dadurch gekennzeichnet, dass** das Dichtungsteil (E) Mittel aufweist, deren Aufgabe es ist, eine Lokalisierung der Trennzone zwischen den Rändern (50) und dem zentralen Bereich (51) des Dichtungsteils (E) zu ermöglichen, um diese Trennung mittels eines Schneidwerkzeugs ohne Beschädigung der Wülste des Luftreifens zu erleichtern.

**2.** Einheit nach Anspruch 1, **dadurch gekennzeichnet, dass** die Lokalisierungsmittel in der Nähe jedes Wulsts eine Rille (oder Rippe) (52) aufweisen, die in Umfangsrichtung auf der radial innenliegenden Fläche des Dichtungsteils ausgerichtet ist.

**3.** Einheit nach Anspruch 1, **dadurch gekennzeichnet, dass** die Ränder (50) des Dichtungsteils (E) am zentralen Bereich (51) entlang von kegelstumpfförmigen Flächen angeklebt sind, die mit der axialen Richtung einen Winkel $\alpha$ von höchstens 60° bilden, und dass die Lokalisierungsmittel auf der Klebfläche oder in deren Nähe ein Material in einer anderen Farbe als der Farbe des Dichtungsteils aufweisen.

**4.** Einheit nach einem der Ansprüche 1 bis 3, **dadurch gekennzeichnet, dass** die Ränder (50) des Dichtungsteils (E) im Axialschnitt gesehen die Form von Bändern mit gekrümmten Rändern (53') aus einem gegenüber Stößen und Rissen, die durch die Werkzeuge zum Ein- und Ausbau der Einheit auf ihre Felge verursacht werden können, festen Material, wobei jeder gekrümmte Rand den Bereich des Rands (50), der sich radial unter jedem Wulst befindet, radial nach außen verlängert.

**5.** Einheit nach einem der Ansprüche 1 bis 4, **dadurch gekennzeichnet, dass** der zentrale Bereich des Dichtungsteils aus einem Material besteht, das geeignete Luftdichtheitseigenschaften aufweist, und dass die Ränder des Teils aus einem anderen und hauptsächlich stoß- und bruchfesten Material bestehen.

**6.** Einheit nach einem der Ansprüche 1 bis 5, **dadurch gekennzeichnet, dass** zumindest der zentrale Bereich (51) des Dichtungsteils (E) in Umfangsrichtung durch Verstärkungen in Form von Seilen oder Drähten verstärkt wird, die einen Winkel von höchstens 45° mit der Umfangsrichtung bilden.

**7.** Einheit nach einem der Ansprüche 1 bis 6, **dadurch gekennzeichnet, dass** das Dichtungsteil einen Ventilfuß (55') aufweist, der Mittel zur Befestigung einer Ventilstange (70') besitzt, wobei diese Befestigungsmittel sich vollständig innerhalb eines Sitzes (52') befinden, der auf dem Dichtungsteil (E) ausgebildet ist und sich auf der radial innenliegenden Seite des Teils öffnet, um den Ein- und Ausbau der Einheit auf ihrer Betriebsfelge durch axiale Verschiebung der Einheit zu ermöglichen und zu erleichtern.

**8.** Einheit nach einem der Ansprüche 1 bis 7, **dadurch gekennzeichnet, dass** die Montagefelge eine Öffnung (60') aufweist, die den Felgenboden für den Durchlass der Ventilstange (70') durchquert, und dass der auf der Innenseite des Dichtungsteils vorgesehene Sitz (52') eine Verstärkung (56') von allgemein zylindrischer Form aufweist, die sich zur Innenseite hin öffnet und eine größere Abmessung als die Breite der Öffnung aufweist, wobei die Verstärkung aus einem druckfesten Material ist, um der Verformung des Dichtungsteils innerhalb der Öffnung (60') zu widerstehen.

**9.** Verfahren zur Herstellung einer Einheit aus Luftreifen (P) und Dichtungsteil (E) nach einem der Ansprüche 1 bis 8, **dadurch gekennzeichnet, dass** es die folgenden Schritte aufweist:

- Herstellung und Vulkanisierung eines Luftreifens mit integriertem Schlauch, wie an sich bekannt, wobei die Durchmesser der Wulstsitze des Luftreifens mindestens gleich den Durchmessern der entsprechenden Sitze der Betriebsfelge sind,
- Herstellung eines nicht vulkanisierten Dichtungsteils aus einer Kautschukmischung durch Coextrusion zum Beispiel mittels einer Strangpresse mit Mundstück und Rollen, wobei dieses Teil Ränder bildende, axiale Endbereiche aufweist,
- Einsetzen des Dichtungsteils innerhalb des Luftreifens derart, dass die Wülste dieses Luftreifens gegen die Ränder anliegen, und Aufbringen dieser Einheit auf eine Montagetrommel mit einer radial ausdehnbaren zylindrischen Formfläche, wobei diese Fläche axial von Seitenbereichen begrenzt wird, die axial das axiale Verschieben der Wülste im folgenden Schritt begrenzen;
- radiales Ausdehnen der Montagetrommel und Aufpumpen des Luftreifens auf einen ausreichenden Druck, um einen geeigneten Kontakt zwischen dem Dichtungsteil und den Wülsten des Luftreifens zu erhalten,
- Vulkanisieren des Dichtungsteils, um das Teil mit Hilfe der Formfläche fest mit dem Luftreifen zu verbinden, die auf die für die Vulkanisierung erforderliche Temperatur gebracht wurde,
- Abbau der Einheit aus Dichtungsteil und Luftreifen und Lagerung in diesem Zustand.

**Claims**

**1.** An assembly comprising a tyre (P) without an inner tube, provided with two beads and intended to be mounted on a mounting rim (J) comprising a rim base extended axially by seats (440) which in turn are extended radially towards the outside by flanges (R), and a rubber sealing piece (E) arranged between said rim and said tyre, the diameters (DP) of the tyre bead seats being greater than the corresponding diameters (DJ) of the rim seats (440), this tyre (P) being provided integrally with the sealing piece (E) formed of three parts which are integral with each other, a central part (51), made of material impermeable to the inflation gases, being placed axially between the beads of the tyre, this central part (51) being extended axially beneath the beads of the tyre by edges (50) integral with said beads, this tyre (P) being **characterised in that** the sealing piece (E) comprises means having the function of permitting location of the zone of separation between the edges (50) and the central part (51) of the sealing piece (E) in order to facilitate this separation by means of a cutting tool without damaging the beads of the tyre.

2. An assembly according to Claim 1, **characterised in that** the location means comprise in the vicinity of each bead a groove/ a rib (52) oriented in the circumferential direction on the radially inner face of the sealing piece.

3. An assembly according to Claim 1, **characterised in that** the edges (50) of the sealing piece (E) are glued to the central part (51) along frustoconical surfaces forming, with the axial direction, an angle $\alpha$ at most equal to 60° and **in that** the location means comprise a material of a different colour from that of the sealing piece on the gluing surface or close thereto.

4. An assembly according to one of Claims 1 to 3, **characterised in that** the edges (50) of the sealing piece (E), viewed in meridian section, are in the form of strips having curved edges (53') of material which is resistant to the shocks and breaking which may be caused by the tools for mounting and dismounting the assembly on/from its rim, each curved edge extending radially towards the outside that part of the edge (50) located radially beneath each bead.

5. An assembly according to one of Claims 1 to 4, **characterised in that** the central part of the sealing piece is made from a material having appropriate airtightness characteristics and **in that** the edges of said piece are produced from a different material essentially resistant to the shocks and breaking.

6. An assembly according to one of Claims 1 to 5, **characterised in that** at least the central part (51) of the sealing piece (E) is reinforced circumferentially by reinforcing members in the form of cables or cords forming an angle at most equal to 45° with the circumferential direction.

7. An assembly according to one of Claims I to 6, **characterised in that** the sealing piece comprises a valve spud (55') having means for fastening a valve stem (70'), these fastening means being located completely within a housing (52') formed on the sealing piece (E) and opening onto the face radially to the inside of said piece for permitting and facilitating the mounting and dismounting by axial displacement of the assembly on its operating rim.

8. An assembly according to one of Claims 1 to 7, **characterised in that** the mounting rim comprises a window (60') passing through the rim base for the passage of the valve stem (70') and **in that** the housing (52') provided on the inner face of the sealing piece comprises a reinforcement (56') of cylindrical general form opening on to said inner face and of dimension greater than the width of the window, said reinforcement being of compression-resistant material in order to oppose the deformation of the sealing piece within the window (60').

9. A process for manufacturing a tyre (P) / sealing piece (E) assembly according to one of Claims 1 to 8, **characterised in that** it comprises the following steps:

- manufacture and vulcanisation of a tyre with an incorporated inner tube, as is known per se, the diameters of the tyre bead seats being at least equal to the diameters of the corresponding operating rim seats;

- manufacture of a non-vulcanised sealing piece of rubber mix by co-extrusion by means for example of a roller-die extruder, this piece comprising axial end parts forming edges;

- positioning of the sealing piece within the tyre such that the beads of this tyre bear on the edges and positioning of this assembly on an assembly drum having a radially expansible, cylindrical moulding surface, this surface being limited axially by lateral parts axially limiting the axial displacement of the beads in the following stage;

- radial expansion of the assembly drum and inflation of the tyre to a pressure sufficient to obtain suitable contact between the sealing piece and the beads of the tyre;

- vulcanisation of the sealing piece to make said piece integral with the tyre by means of the moulding surface brought to the temperature required for said vulcanisation;

- dismounting of the sealing piece / tyre assembly and storage as is.

FIG. 1

FIG. 2

FIG. 3